# EUROPEAN PATENT APPLICATION

(11) **EP 4 209 866 A1**
(43) Date of publication of application: **12.07.2023**
(21) Application number: 22213435.5
(22) Date of filing: 14.12.2022
(51) Int. Cl.: G06F 3/01, G01S 1/72, G01S 5/30, H04S 7/00

(54) **CONTENT GENERATION SYSTEM AND METHOD**

(30) Priority: 05.01.2022 GB 202200061
(71) Applicant: Sony Interactive Entertainment Inc., Tokyo 108-0075 (JP)
(72) Inventor: ARMSTRONG, Calum, London, W1F 7LP (GB)
(74) Representative: D Young & Co LLP

(57) **Abstract**

A system for generating outputs to a user in dependence upon audio emitted by one or more audio markers, the system comprising an audio detection unit operable to detect audio emitted by one or more of the audio markers, the audio markers being configured to emit audio in accordance with one or more predetermined conditions, an audio marker locating unit operable to determine one or more properties, including at least a proximity to a user, of audio markers in dependence upon the detected audio corresponding to that audio marker, and a rendering unit operable to output one or more images for display to a user in dependence upon one or more of the determined properties of the one or more audio markers.

## Description

### BACKGROUND OF THE INVENTION

### Field of the invention

This disclosure relates to a content generation system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Over time, the use of head-mountable displays (HMDs) has become increasingly popular. This has been driven in part by technological advances, enabling a higher-quality user experience, as well as the increase in the amount of content that is available to users. The distribution of such content has also become increasingly effective (despite commonly being associated with large quantities of data) due to increasing internet access and speeds, while improvements to display and rendering technology have improved the quality of the content displayed to the user.

Such devices may be implemented in any of a number of different ways. In some cases, a user may mount a portable device (such as a mobile phone) proximate to their eyes such that the display element of that device occupies a desired proportion of their field of view. In other cases, a specialised device may be provided, which may be associated with a computer or a games console or the like to offer an increased processing power for generating imagery.

HMDs tend to fall within one of two different categories - that of full-immersion and see-through. The latter is often used for mixed or augmented reality applications, as it enables the user to see their surroundings with virtual elements overlaid. Meanwhile, the former is generally used for purely virtual content (virtual reality), although a camera may be used to provide a video feed of the user's surroundings during use.

In the latter category (full-immersion), it is considered that a user is generally not aware of their surroundings which can lead to poor interactions. For instance, a user may be unable to locate particular objects in the environment, may collide with obstacles, or may not be aware of changes to their surroundings (such as objects moving, or people entering a room). This can lead to safety concerns in addition to a generally undesirable experience.

Earlier arrangements have sought to alleviate these problems through the use of microphones and/or cameras that enable information about the real world to be passed through to the user of a full-immersion HMD. However, determining when this is appropriate may be an issue, as well as a significant loss of immersion for the user when the passed-through content interrupts the virtual content being experienced by the user.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a system according to embodiments of the present disclosure;
Figure 3 schematically illustrates a method for generating information for presentation to a user in dependence upon detected audio from audio markers;
Figure 4 schematically illustrates a method for operation of an audio marker;
Figure 5 schematically illustrates a method for controlling elements;
Figure 6 schematically illustrates a system for generating outputs to a user;
Figure 7 schematically illustrates a configuration of an audio processing unit; and
Figure 8 schematically illustrates a method for generating outputs to a user.

### DESCRIPTION OF THE EMBODIMENTS

Referring now to the drawings, wherein like reference numerals designate identical or corresponding parts throughout the several views, embodiments of the present disclosure are described.

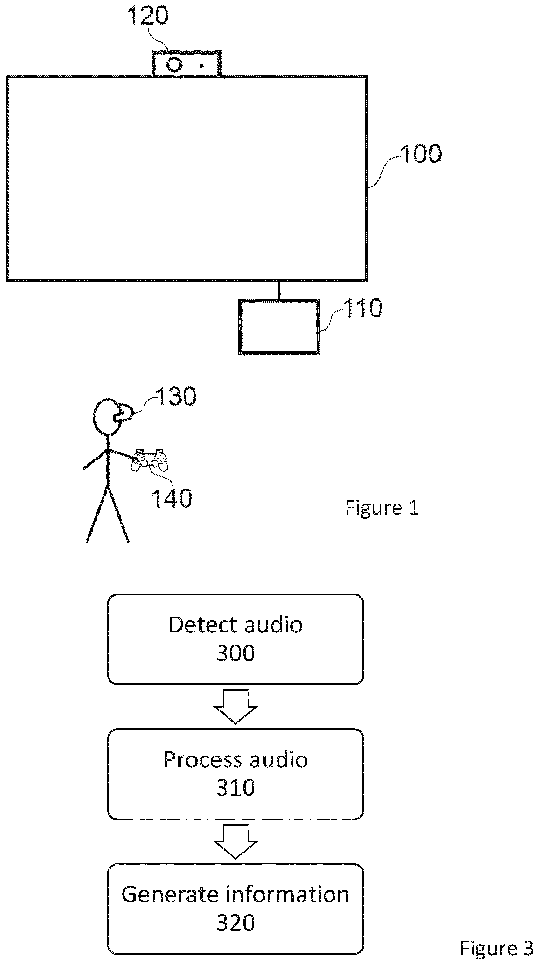

Figure 1 schematically illustrates an entertainment system suitable for implementing one or more of the embodiments of the present disclosure. Any suitable combination of devices and peripherals may be used to implement embodiments of the present disclosure, rather than being limited only to the configuration shown in this Figure.

A display device 100, associated with a games console 110, is used to display content to one or more users and/or viewers; users are considered to be those that interact with the displayed content, such as players of a game, while viewers are those which view the content without interacting with it. This content may be a video game, for example, or any other content such as a movie or any other video content. The games console 110 is an example of a content providing device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated video camera and microphone 120) may be provided to capture images and/or audio in the environment of the display device. While shown as a separate unit in this Figure, it is considered that such devices may be integrated within one or more other units (such as the display device 100 or the games console 110 in Figure 1).

In some implementations, an additional or alternative display device such as the head-mountable display (HMD) 130 may be provided. Such a display can be word on the head of a user, and is operable to provide augmented reality or virtual reality content to a user via a near-eye display screen. A user may be further provided with a controller 140 which enables the user to interact with the games console 110. This may be through the provision of buttons, motion sensors, cameras, microphones, and/or any other suitable method of detecting an input from or action by a user.

In many cases, a user of an HMD (such as the HMD 130 in Figure 1) has a reduced awareness of their real-world surroundings due to the level of immersion that the content provides (for instance, through the use of a full-immersion display arrangement and in-ear headphones). In such cases it may be advantageous to increase the awareness of the user; this can, for example, result in improvements to the safety of the user and their enjoyment of the content.

One example of a way in which user's awareness may be increased in full-immersion HMD embodiments is that of the definition of a 'safe play' area within the user's real-world environment. This is usually indicated by visual elements (such as AR markers or distinctive features within the environment), or set manually by a user with an input device. If a user approaches the edges of this safe play area, warnings (such as a virtual boundary in the virtual environment) can be displayed that discourage a user from moving any further in the direction of the edge of the safe play area.

While effective in many cases, such an arrangement may have numerous drawbacks. For instance, in some cases the location of a camera may mean that occlusions (or just poor relative positioning) may prevent markers from being seen by the camera. This can result in a failure of the safety system. Further to this, such a system may not be robust to moving objects or the like - and therefore there are limitations as to what information is able to be provided to the user to increase their awareness of real-world conditions.

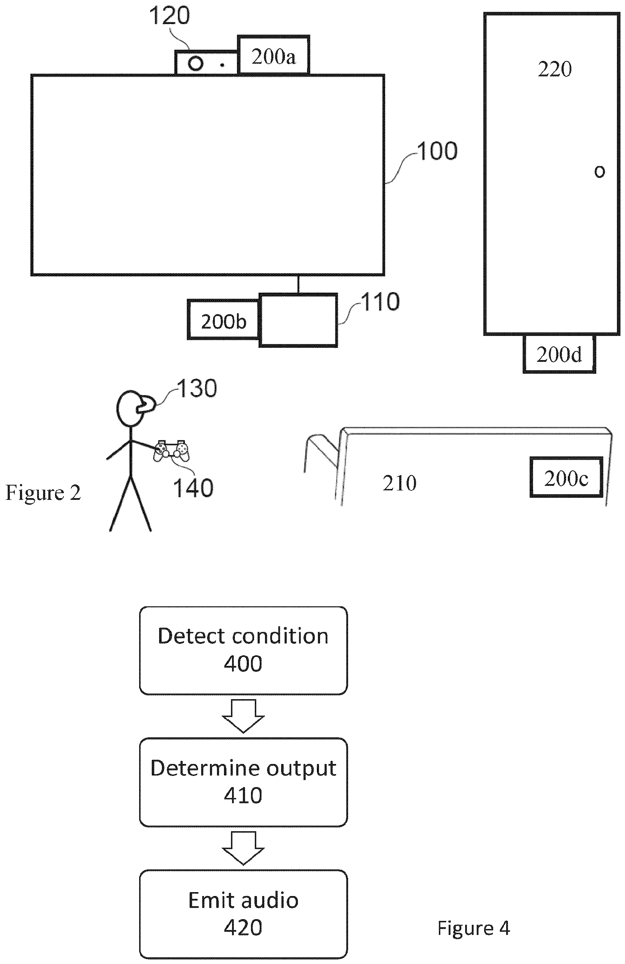

Figure 2 schematically illustrates a system according to embodiments of the present disclosure. This Figure comprises the elements of Figure 1, with additional audio markers distributed throughout the environment and other objects that may be present in a typical user's environment. These audio markers are elements capable of emitting audio that is intended to be captured by an audio detecting device (such as a microphone at the HMD); this is one aspect of the markers than distinguishes them from generic sound sources, as the audio emission is specifically intended for reception by the audio detecting device.

Note that the relative sizes of objects in Figure 2 are not intended to be realistic in any way - the sizes are selected for clarity of the illustration only. For instance, the audio markers 200 may in practice be much smaller than the relative size in Figure 2 would suggest. This can enable them to be relatively inconspicuous, and therefore be less obstructive in the user's environment.

The audio markers 200 may each be configured in a manner that offers a desired functionality. For instance, while some may be useful simply as beacons to help with determining a relative location of the marker and an audio detecting device others may be more active in that they convey information about dynamic elements within the environment.

The audio marker 200a is associated with the camera and microphone 120; this association may be functional (in that the elements are communicatively linked), or may be entirely locational. This audio marker 200a may be configured to emit audio at a predetermined interval and volume, so as to assist with tracking of one or more elements associated with a user. For instance, the HMD 130 and/or controller 140 may comprise a microphone that is operable to detect the audio emitted by the marker 200a; based upon a capture time and/or apparent volume it may be possible to estimate the location of the microphone relative to the marker 200a. This may be performed based upon a number of constraints such as the user being a known height, and the last known position of the user or the elements. Such functionality may be useful in providing improved tracking when occlusions or the like cause a decrease in the tracking accuracy for the user.

The audio marker 200b is associated with the games console 110, and this audio marker 200b may be configured to emit audio based upon an output of the games console. An example of an output of the games console is that of a signal in response an in-game event, a notification, or a predetermined condition such as a location of the user. This can enable the audio marker to convey information using sound, which may reduce a burden on alternative communication means.

The audio marker 200c is associated with the seat 210; this may be an incorporated marker that is a permanent fixture of the seat 210, or it may be temporarily affixed to (or otherwise placed upon) the seat 210. The marker 200c may be configured so as to emit audio whenever a user comes within a predetermined distance of the marker 200c; this may be detected based upon images captured by a camera associated with the audio marker 200c, for example, or through any other suitable proximity detection. In some cases, the proximity detection may be audio based, or may rely on a signal strength from a wireless communication method or the like. This can enable a reliable method of warning a user that they are close to an obstacle even if camera-based tracking associated with the games console 110 or HMD 130 fails (or is not implemented).

The audio marker 200d is associated with the door 220; the marker may be arranged on the frame, for example, or on the door itself. The audio marker 200d may be configured to generate audio in response to a detected motion - this may be of the door itself (such as being opened by a person entering the room), or of a person or pet walking through the door (for example). Motion may be detected through the use of a hardware motion detector, such as an accelerometer, or any other method - an example may be that of an infra-red sensor which is triggered by a person walking through the doorway. Such a marker 200d may therefore be useful in that it is able to be used to announce events that occur within the environment which the user may otherwise be unaware of.

Of course, audio markers may be considered to perform a variety of functions rather than being limited to a single one; different uses may result in different audio outputs to enable a differentiation. These different outputs may utilise different audio frequencies and/or different audio patterns so as to communicate information relating to different functions. In some cases, these audio frequencies may be audible to a user - alternatively, ultrasonic or subsonic frequencies that are inaudible to users may be used. In some cases, it may also be preferable to select frequencies that are not able to be heard by common household pets. To this end, the frequencies may be able to be selected in dependence upon a user input based upon such considerations.

One further exemplary use of audio markers includes associating markers with moving objects - such as attaching an audio marker to a pet collar, a child's wrist, or a robot vacuum cleaner. This can enable an approximate location of that object to be identified, for example by detection of a continuous audio emission (or an emission with a predetermined interval) or any other method by which audio emissions may be triggered.

Other uses may also be envisaged within the scope of the claims, with the uses including a location of an audio marker and the selection of appropriate predetermined conditions for emitting audio for detection. For instance, audio-based, video- or image-based, proximity-based, or motion-based detections may be considered. In some embodiments the use of 'chained' markers (such that an output of one marker is detected by another, with the other marker generating an output in dependence upon at least that first output) may be considered.

Figure 3 schematically illustrates a method for generating information for presentation to a user in dependence upon detected audio from audio markers in line with the above discussion.

At a step 300, audio from one or more audio markers is detected. As noted above, this audio may be detected at an HMD worn by a user, a controller used by the user, and/or any other device in the environment. One or more microphones may be used for such a purpose; in some cases, this may include one or more directional microphones and/or microphone arrays so as to assist with localising the source of the detected audio. In the case in which multiple devices are used to detect the audio, localisation may be performed based upon the differences between the detected audio (such as time of arrival) and information about the locations of the detecting devices.

At a step 310, the detected audio is subjected to processing to determine one or more characteristics of the audio and/or the corresponding marker. This may include determining one or more of a frequency of the audio, a frequency profile, a volume, a time of arrival, identifiers within the audio, and/or any other information contained within the detected audio. Similarly, the processing may include determining an identity and/or location of the audio marker and/or an object with which the audio marker is associated.

At a step 320, information is generated for presentation to the user in dependence upon the outcome of the processing in step 310. Such information is dependent upon the detected audio and the information derived from that, and as such can take any suitable audio- or image-based form (or indeed other forms, such as haptic feedback). Examples of information include a warning of proximity to an audio marker (and/or an object associated with the marker), information warning of a change of position for a marker (and/or an object associated with the marker), and information about a change in the environment as communicated by an audio marker (such as an indication that a person has entered the room).

Figure 3 therefore provides an example of a method in which the audio emitted by an audio marker (such as the markers 200 of Figure 2) is detected and corresponding information is presented to the user of a device such as the HMD 130 of Figure 2.

Figure 4 schematically illustrates a method for operation of an audio marker (such as the markers 200 of Figure 2) in accordance with embodiments of the present disclosure.

A step 400 comprises detecting whether a predetermined condition for the emitting of audio to be performed by an audio marker is satisfied. In some embodiments the predetermined condition may be an elapsed time since the last emitted audio, so as to achieve a periodic audio emission by the audio marker. Other conditions may be defined as appropriate for a given implementation; examples include proximity to another element (such as the user), motion of the marker, motion detected by the marker, interaction with the marker or an associated object, operation of an element associated with the marker, or any other condition or combination of conditions.

A step 410 comprises a determination of an output to be provided by the audio marker. In some cases this may consist of determining an appropriate audio emission based upon the satisfied condition and/or one or more detections of a state of the audio marker or object associated with the marker. The state here may refer to a position or motion of the marker, for instance, or any other characteristic. In some embodiments the output comprises non-audio elements, such as an output via other means (such as a wireless communication) with other devices. For instance, in some embodiments it may be considered that audio markers are able to communicate with one another wirelessly or via a wired connection; this may be advantageous in that more complex predetermined conditions may be set due to being able to effectively introduce dependency between audio emissions by respective audio markers.

In some cases an audio marker may have a limited capacity for output - such as a single frequency/volume/emission pattern - and therefore the determination is simply a binary determination of whether to emit audio or not. However, in other cases the determination may include a selection of what form the audio output takes - including an emission pattern, frequency (or frequencies), volume, number of repetitions of the audio, and any other characteristics.

A step 420 comprises the emission of audio and transmission of any other outputs as determined in step 410. This emission may be a one-off event, or may be a repeated emission for a predetermined period of time or until a predetermined condition (such as a change in proximity to a user or a change in location) is satisfied.

This Figure illustrates an exemplary method for generating an audio output using an audio marker. Such a method is intended to demonstrate a framework for how to operate an audio marker in accordance with embodiments of the present disclosure, and is not intended to be limiting - the actual operation of an audio marker may vary as appropriate for a given implementation, as the conditions leading to an emission and the audio emission itself may vary significantly in accordance with the requirements of a particular embodiment.

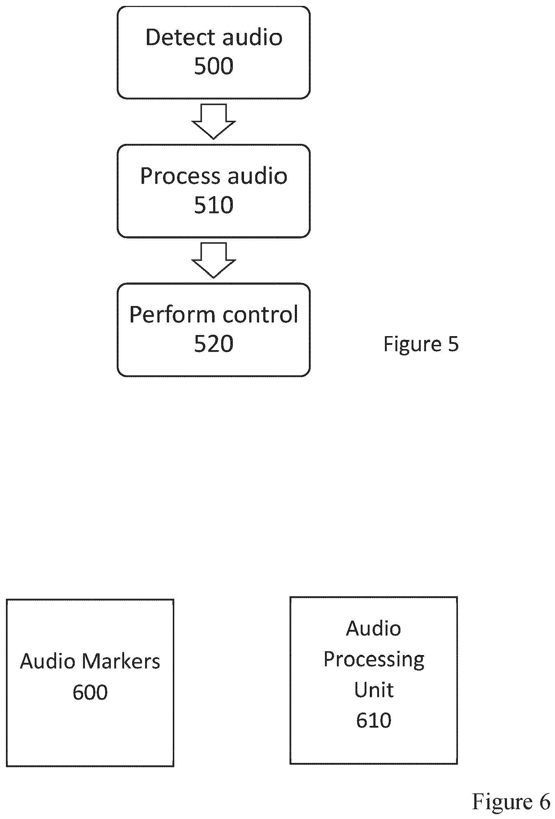

Figure 5 schematically illustrates a method for controlling elements in accordance with the detection of audio from an audio marker. This control may be performed instead of, or in addition to, the generation of information for presentation to a user. By providing such a function, the detection of audio emitted by an audio marker can be used to provide functionality that can improve the safety of the environment for the user, for example, thereby taking a more active approach to user safety.

Steps 500 and 510 are not discussed fully here as they largely correspond to steps 300 and 310 as discussed with reference to Figure 3 above.

One feature of step 510 that is considered to be of particular importance in such embodiments is that of identifying an element associated with the marker. This element may be an object into which a marker is incorporated, for example, or an object to which a marker is affixed. Similarly, the element may be a human or animal which wears a marker. This may be derived from the detected audio itself (for instance, if the audio comprises identifying information), or may be determined based upon known positions of markers within an environment or the like.

Once this element has been identified, step 520 can be performed. This step comprises the generation and output of control information for one or more devices in dependence upon the detected audio and its characterisation. The controlled device need not be directly associated with the marker; however in some cases the controlled device is a device that incorporates a marker or has one attached.

In a first example of such control, a robot vacuum cleaner is a device which incorporates an audio marker in a permanent or temporary manner. The audio marker may be configured to emit audio in a periodic fashion, and with a predetermined volume. When this audio is detected, it may be determined that the robot vacuum cleaner is within a particular proximity of the user (alternatively, the proximity may be determined based upon the detection rather than a binary consideration of whether the audio is detected). In response to this proximity detection, control may be performed to cause the robot vacuum cleaner to modify its operation. For instance, control may be performed to cause the cleaner to leave the room that the user is in, or an exclusion zone (for instance, corresponding to a defined safe play area) may be defined into which the cleaner is not permitted to enter. Similarly, the cleaner could be controlled to pause its activities until the user has finished their gaming session or the like. Any of these examples of performing control of a device in response to the detection of audio emitted by an audio marker may be considered advantageous in that it can improve the user's safety as well as that of the robot vacuum cleaner.

In a second example of such control, an audio marker is associated with a door and is configured to detect when the door moves. This control may include shutting the door - particularly if the door encroaches on a safe play area when open. In some cases the detected motion can be characterised based upon the detected audio; for instance, if a regular detection is made this could indicate that a door is swinging in the wind rather than being operated by a person, which can trigger the closing of the door using any suitable means. For instance, the control may be performed for a magnetic element associated with the door, or a piston or retractable cable that can cause the door to move.

In a third example of such control, control may be performed for a device that is external to the user's immediate environment. For instance, if an audio marker associated with a pet is detected to be within a threshold proximity of the user during a play session or the like then control may be performed of a device that attracts the pet's attention - examples include toys or the like, for instance a ball launcher in a user's garden may be activated to attract a dog to go to the garden rather than interfere with the user's play session.

A fourth example of a control that may be performed is that of controlling a games console or the like with which the HMD is associated. For instance, if an audio marker associated with a door or the like is detected as being triggered this can be interpreted as a new person having entered the room in which the user is playing. Control can then be performed in response to this in which causes the display of a spectator screen by the games console (such as the console 110 of Figure 2) at another associated display (such as the television 100 shown in Figure 2). Similarly, control may be performed to activate a multiplayer mode or the like to enable the new player to join the game.

Figure 6 schematically illustrates a system for generating outputs to a user in dependence upon audio emitted by one or more audio markers, the system comprising one or more audio markers 600 and an audio processing unit 610.

The one or more audio markers 600 are configured to emit audio in accordance with one or more predetermined conditions. These conditions may be temporal (such as an elapsed time since the previous audio emission), for example, or may be based upon a determination of user proximity to the marker. In some embodiments, one or more of the audio markers 600 is operable to emit audio in response to motion of the marker and/or in response to a detection, by the marker or associated object, of motion of other markers. The audio emitted by the audio markers 600 may be at a frequency not audible to the user in some embodiments, so as to reduce an impact on people within the user's environment.

In some embodiments, the audio emitted by the audio markers 600 comprises an object identifier that identifies the corresponding audio marker and/or an object associated with that audio marker. Alternatively, or in addition, the audio emitted by the audio markers may be emitted with a timing that enables identification of the audio marker and/or an object associated with that audio marker.

The audio processing unit 610 is configured to detect the audio emitted by the one or more audio markers 600, and to generate a response in dependence upon the detected audio. This response may include image- or audio-based feedback to a user, for example, or the performing of control of another device. This feedback may comprise any warnings or information relevant to the detected audio emitted by an audio marker 600 as appropriate.

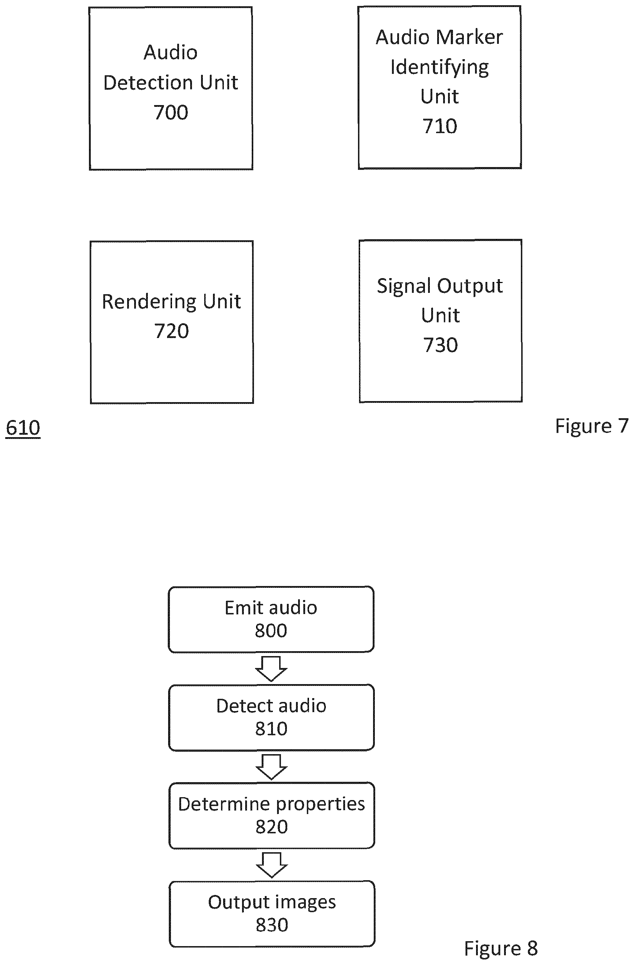

Figure 7 schematically illustrates an exemplary configuration of the audio processing unit 610 of Figure 6. The audio processing unit 610 comprises an audio detection unit 700, an audio marker identifying unit 710, a rendering unit 720, and a signal output unit 730. While shown as a single unit here, it is also considered that in some embodiments the functionality of these units may be distributed amongst a number of different devices; for instance, some processing may be offloaded to a games console rather than being performed at an HMD where microphones may be located.

The audio detection unit 700 is operable to detect audio emitted by one or more of the audio markers, the audio markers being configured to emit audio in accordance with one or more predetermined conditions. The audio detection unit 700 may include one or more microphones; in some embodiments, this may include a microphone array and/or one or more directional microphones so as to assist with localising the source of detected audio.

In some embodiments the audio detection unit 700 is located at a head-mountable display device to be worn by the user; alternatively, or in addition, audio detection may be performed by a game controller or other peripheral operated by a user. In some embodiments audio detection may be performed such that if the head-mountable display device comprises one or more outward-facing cameras, the audio detection unit is operable to capture audio emitted by audio markers located in an area not visible to the cameras.

The audio marker identifying unit 710 is operable to determine one or more properties, including at least a proximity to a user, of audio markers in dependence upon the detected audio corresponding to that audio marker. The one or more properties may further include a direction and/or velocity of audio markers relative to the user, for example, and/or the identity of the marker or an associated object.

The rendering unit 720 is operable to output one or more images for display to a user in dependence upon one or more of the determined properties of the one or more audio markers. The images for display may function as an alert to be displayed to the user, for instance warning them of proximity to obstacles, or the images may perform a more informative function in which a user is presented with information based upon the audio detection (such as an announcement of the arrival of a person in the environment). It is also considered that the rendering unit 720 is operable to generate one or more sounds in addition to (or instead of) the images for display. The outputting of images and/or audio may be performed in any suitable manner, including those discussed with reference to Figure 5.

In some embodiments, wherein the rendering unit 720 is operable to display video of the environment of the user, the video being selected so as to correspond to the location of an audio marker associated with detected audio. In some embodiments this may include a reorientation of a camera to capture images of the corresponding location, and/or cropping an image to display only those portions corresponding to the marker and its immediate surroundings (or any other image size about the marker).

The signal output unit 730 is operable to generate and output signals to control the operation of one or more devices associated with audio markers corresponding to detected audio. These signals may be output using any suitable communication method - examples include wired or wireless communication protocols, for instance. The selection of how to output signals may be freely performed in accordance with the target of the communication. The control may be performed in any suitable manner, including those discussed with reference to Figure 5.

The arrangement of Figure 7 is an example of a processor (for example, a GPU and/or CPU located in a games console or any other computing device) that is operable to generate outputs to a user in dependence upon audio emitted by one or more audio markers, and in particular is operable to:
detect audio emitted by one or more of the audio markers, the audio markers being configured to emit audio in accordance with one or more predetermined conditions;
an audio marker locating unit operable to determine one or more properties, including at least a proximity to a user, of audio markers in dependence upon the detected audio corresponding to that audio marker; and
output one or more images for display to a user in dependence upon one or more of the determined properties of the one or more audio markers.

Figure 8 schematically illustrates a method for generating outputs to a user in dependence upon audio emitted by one or more audio markers.

A step 800 comprises emitting audio in response to motion of the marker and/or in response to a detection, by the marker or associated object, of motion of other markers.

A step 810 comprises detecting audio emitted by one or more of the audio markers, the audio markers being configured to emit audio in accordance with one or more predetermined conditions.

A step 820 comprises determining one or more properties, including at least a proximity to a user, of audio markers in dependence upon the detected audio corresponding to that audio marker.

A step 830 comprises outputting one or more images for display to a user in dependence upon one or more of the determined properties of the one or more audio markers.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for generating outputs to a user in dependence upon audio emitted by one or more audio markers, the system comprising:
an audio detection unit operable to detect audio emitted by one or more of the audio markers, the audio markers being configured to emit audio in accordance with one or more predetermined conditions;
an audio marker identifying unit operable to determine one or more properties, including at least a proximity to a user, of audio markers in dependence upon the detected audio corresponding to that audio marker; and
a rendering unit operable to output one or more images for display to a user in dependence upon one or more of the determined properties of the one or more audio markers.

2. A system according to claim 1, wherein the one or more properties further includes a direction and/or velocity of audio markers relative to the user.

3. A system according to any preceding claim, wherein the audio emitted by the audio markers comprises an object identifier that identifies the corresponding audio marker and/or an object associated with that audio marker.

4. A system according to any preceding claim, wherein the audio emitted by the audio markers is emitted with a timing that enables identification of the audio marker and/or an object associated with that audio marker.

5. A system according to any preceding claim, wherein the audio detection unit comprises a microphone array and/or one or more directional microphones.

6. A system according to any preceding claim, wherein the audio emitted by the audio markers is at a frequency not audible to the user.

7. A system according to any preceding claim, wherein the rendering unit is operable to generate an alert to be displayed to the user.

8. A system according to any preceding claim, wherein the rendering unit is operable to display video of the environment of the user, the video being selected so as to correspond to the location of an audio marker associated with detected audio.

9. A system according to any preceding claim, comprising a signal output unit operable to generate and output signals to control the operation of one or more devices associated with audio markers corresponding to detected audio.

10. A system according to any preceding claim, comprising one or more audio markers, wherein one or more of the audio markers are operable to emit audio in response to motion of the marker and/or in response to a detection, by the marker or associated object, of motion of other markers.

11. A system according to any preceding claim, wherein the audio detection unit is located at a head-mountable display device to be worn by the user.

12. A system according to claim 11, wherein the head-mountable display device comprises one or more outward-facing cameras, and wherein the audio detection unit is operable to capture audio emitted by audio markers located in an area not visible to the cameras.

13. A method for generating outputs to a user in dependence upon audio emitted by one or more audio markers, the method comprising:
detecting audio emitted by one or more of the audio markers, the audio markers being configured to emit audio in accordance with one or more predetermined conditions;
determining one or more properties, including at least a proximity to a user, of audio markers in dependence upon the detected audio corresponding to that audio marker; and
outputting one or more images for display to a user in dependence upon one or more of the determined properties of the one or more audio markers.

14. Computer software which, when executed by a computer, causes the computer to carry out the method of claim 13.

15. A non-transitory machine-readable storage medium which stores computer software according to claim 14.
